# FASCICULE DE BREVET EUROPEEN

(11) **EP 1 556 239 B1**
(45) Date de publication et mention de la délivrance du brevet: **20.08.2008**
(21) Numéro de dépôt: 03767858.8
(22) Date de dépôt: 29.10.2003
(51) Int. Cl.: B60J 7/20, B60J 7/14, B60J 7/12

(54) **ASSEMBLAGE MODULAIRE POUR VEHICULE AVEC UN TOIT REPLIABLE ET VEHICULE CORRESPONDANT**
MODULARE MONTAGEEINHEIT FÜR EIN KFZ MIT FALTBAREM DACH UND EIN KFZ MIT SOLCH EINER EINHEIT
MODULAR ASSEMBLY FOR VEHICLE WITH RETRACTABLE ROOF AND CORRESPONDING VEHICLE

(30) Priorité: 30.10.2002 FR 0213606; 18.04.2003 FR 0304894
(43) Date de publication de la demande: 27.07.2005
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirieres (FR)
(74) Mandataire: Pichat, Thierry
(86) Numéro de dépôt international: PCT/FR2003/003226
(87) Numéro de publication internationale: WO 2004/041573

(56) Documents cités:
- EP-A- 0 970 834
- EP-A- 1 213 169
- DE-A- 19 820 338
- DE-C- 4 232 147
- DE-U- 29 812 165
- FR-A- 2 601 906
- FR-A- 2 802 477
- US-A- 2 762 648

## Description

Sont ici concernés trois sujets dans le domaine automobile, pouvant être considérés ensemble ou séparément .
- un système de plage arrière escamotable, notamment pour un véhicule découvrable à toit rigide repliable dans le coffre arrière dudit véhicule,
- un dispositif adapté à faire pivoter un dossier (3) de siège de ce véhicule, autour d'un axe (28) situé en partie inférieure du dossier,.
- et un assemblage modulaire comprenant le système de plage arrière et le dispositif de pivotement du dossier (3) de siège.

Bien entendu le véhicule pourvu de tout ou partie de ces trois équipements est également concerné, ce véhicule comprenant au ici un toit rigide (en plusieurs parties) repliable, mobile entre une position déployée dans laquelle il recouvre l'habitacle du véhicule et une position pliée, rangée dans laquelle il est dans le coffre arrière du véhicule.

Le toit est entraîné de l'une à l'autre de ses positions par un bras d'entraînement qui est monté de façon pivotante au toit de la carrosserie.

Le coffre est recouvert par un capot qui est mobile entre une position fermée et une position ouverte de l'avant vers l'arrière afin de permettre le passage du toit dans le coffre.

Il n'existe aujourd'hui apparemment pas d'ensembles modulaires qui associent un toit escamotable, une plage arrière qui occupe un volume limité lorsqu'elle bouge pour laisser passer les éléments rigides du toit, et un dossier arrière équipé d'un dispositif permettant de faciliter le passage de ce toit tant lorsqu'il sort que lorsqu'on le replie dans le coffre arrière du véhicule.

C'est pour combler ce manque qu'un premier aspect de la présente demande concerne un assemblage modulaire comprenant :
- un dispositif adapté à faire pivoter un dossier de siège autour d'un axe situé en partie inférieure de ce dossier, lequel délimite vers l'avant sensiblement le coffre arrière d'un véhicule découvrable comprenant un toit en plusieurs parties rigides, repliable et entraîné pour cela par un bras d'entraînement monté de façon pivotante sur la carrosserie du véhicule, entre une position déployée et une position pliée, rangé dans le coffre, le dispositif étant adapté, quand le toit est déplacé de l'une à l'autre de ses positions, à faire pivoter le dossier entre une première position angulaire dans laquelle le dossier s'étend vers l'arrière du véhicule et dans laquelle le toit est dans sa position déployée, et une seconde position angulaire dans laquelle le dossier se trouve le plus en avant, de façon à permettre le passage du toit entre le dossier et le bord avant du capot, en position ouverte de celui-ci,
- et un système de plage arrière escamotable comprenant au moins une tablette centrale et des moyens pour déplacer la tablette centrale dans les deux sens entre sa position normale sensiblement horizontale et une position rangée, à l'intérieur du coffre, sensiblement contre la paroi limitant ledit coffre vers l'avant, position dans laquelle on peut replier le toit à l'intérieur dudit coffre, la tablette centrale comportant, sur chaque bord latéral, un premier et un second organes formant galets de came en saillie vers l'extérieur par rapport audit bord latéral et adaptés à coopérer chacun avec un premier ou un second organe complémentaire formant came, chacun solidaire de (ou solidarisable à) la carrosserie du véhicule, les organes formant galets de came et les organes complémentaires formant cames étant agencés de manière à guider la tablette centrale selon une trajectoire prédéterminée entre ses deux positions normale et rangée, dans un sens ou dans l'autre, sous l'action de moyens d'actionnement de ladite tablette centrale agissant à proximité du bord avant de cette tablette centrale, les deux organes complémentaires formant cames situés d'un même côté de la carrosserie étant portés par une armature respective solidaire de la carrosserie, chaque armature étant adaptée à être fixée sur le dossier de siège correspondant.

Avantageusement, lesdites armatures sont reliées l'une à l'autre par des traverses pour constituer un cadre portant la tablette de manière à former un système de plage arrière d'un seul tenant. On renforce encore ainsi l'aspect unitaire de l'ensemble.

Concernant le véhicule en tant que tel, celui-ci comprendra :
- une carrosserie,
- un coffre arrière,
- un toit rigide repliable entraîné, par un bras d'entraînement monté de façon pivotante sur la carrosserie, entre une position déployée et une position pliée rangée dans le coffre,
- au moins un dossier de siège monté pivotant autour d'un axe situé de préférence en partie inférieure de ce dossier, lequel délimite sensiblement, vers l'avant, le coffre arrière,
- et l'assemblage modulaire tel qu'il se présente ici.

Selon la géométrie et les dimensions du toit, de la plage arrière et du capot, il peut s'avérer que la distance entre le haut du dossier du siège délimitant le coffre arrière et le bord avant du capot en position ouverte soit légèrement inférieure à l'épaisseur du toit en cours de pliage (on entend par épaisseur du toit l'encombrement qu'il génère dans une direction normale à la direction transversale du véhicule et sensiblement normale à la direction principale des custodes), et plus précisément que cette distance ne permette pas le débattement nécessaire à la partie arrière du toit.

Dans le domaine des dispositifs de pivotement pour dossier de siège sur de tels véhicules, on en connaît ainsi où, comme dans FR-A-2 601 906, lorsque le toit est dans sa position rangée, le dossier se trouve alors dans sa deuxième position angulaire dans laquelle il est orienté quasiment verticalement, ce qui rend le siège particulièrement peu confortable.

C'est donc un problème que de réaliser un dispositif d'entraînement de dossier permettant au(x) siège(s) « arrière » de demeurer confortable(s) quand le toit est dans sa position pliée rangée.

Ainsi, un autre aspect de la demande concerne un dispositif de pivotement de dossier comprenant des moyens de transmission qui coopèrent avec le(s) bras d'entraînement du toit et qui sont adaptés à entraîner le dossier dans un mouvement de va-et-vient de sorte que, quand le toit est dans sa position pliée rangée, le dossier se trouve dans une troisième position angulaire dans laquelle il est en arrière de sa deuxième position angulaire.

Est en outre ici concerné un module de dossier de siège délimitant le coffre arrière d'un véhicule, caractérisé en ce qu'il comporte le dossier, des arceaux de sécurité, un palier lisse et des embases vis à vis desquels le dossier est monté de façon pivotante, ainsi que le dispositif de pivotement présenté ci-avant, des moyens d'immobilisation du dossier et des moyens de guidage de ce dossier étant adjoints.

Encore un autre but du présent descriptif est de proposer une solution qui remédie aux inconvénients des systèmes de plage arrière escamotable connus, en ménageant un espace libre de longueur maximale pour le rangement des diverses parties de toit.

D'après FR-A-2 802 477 on connaît un système de plage arrière escamotable comprenant au moins une tablette centrale et des moyens pour déplacer la tablette centrale dans les deux sens entre la position normale, sensiblement horizontale, et une position rangée, à l'intérieur du coffre arrière et sensiblement contre la paroi limitant ledit coffre arrière vers l'avant, dans laquelle on peut replier le toit repliable à l'intérieur dudit coffre arrière.

Cette structure, qui donne satisfaction aux utilisateurs, peut être gênante lorsque l'on a besoin, dans la partie supérieure du coffre arrière, d'une longueur dans la direction longitudinale du véhicule aussi grande que possible pour loger les diverse parties du toit repliable qui occupent de façon connue, dans la position repliée du toit à l'intérieur du coffre arrière, un espace important dans la partie supérieure dudit coffre.

Une solution de système de plage arrière escamotable proposée est telle que :
- la tablette centrale comporte, sur chaque bord latéral, un premier et un second organes formant galets de came en saillie vers l'extérieur par rapport audit bord latéral et adaptés à coopérer chacun avec un premier ou un second organe complémentaire formant came respectif solidaire de la carrosserie du véhicule,
- le premier organe complémentaire formant came est adapté à coopérer avec le premier organe formant galet et est sensiblement rectiligne,
- le second organe complémentaire formant came est adapté à coopérer avec le second organe formant galet et est courbé vers l'arrière dans sa partie supérieure de manière à faire pivoter la tablette centrale vers l'arrière à la fin de son déplacement vers sa position normale,
- les organes formant galets de came et les organes complémentaires formant cames respectifs sont agencés de manière à guider la tablette centrale selon une trajectoire prédéterminée entre ses deux positions normale et rangée, dans un sens ou dans l'autre, sous l'action de moyens d'actionnement de ladite tablette centrale agissant à proximité du bord avant (18) de ladite tablette centrale.

Suivant une version préférée, les deux organes complémentaires formant cames situés d'un même côté de la carrosserie sont portés par une armature respective solidaire de la carrosserie du véhicule et fixée par exemple sur la surface arrière d'un dossier de siège correspondant, ledit dossier étant avantageusement monté de manière pivotante autour d'un axe transversal situé à la partie inférieure dudit dossier.

Dans ce cas, on fait pivoter légèrement le dossier vers l'avant pour ménager un espace libre de longueur maximale pour le rangement des diverses parties de toit dans la partie supérieure du coffre arrière.

D'autres particularités et avantages des sujets ici présentés apparaîtront dans la description détaillée ci-après.

Dans les dessins annexés, donnés uniquement à titre d'exemples non limitatifs :
- La figure 1 est une vue schématique partielle en élévation d'un véhicule équipé d'un système de plage arrière escamotable perfectionné ici présenté, la tablette centrale étant représentée en traits pleins dans sa position normale et en tirets dans une position partiellement pivotée;
- La figure 2 est une vue schématique partielle en perspective éclatée d'un mode de réalisation du système de plage arrière escamotable schématisé à la figure 1;
- La figure 3 est une vue schématique partielle en perspective représentant un mode de réalisation des moyens d'actionnement d'un système de plage arrière selon la présente solution;
- La figure 4 est une vue semblable à la figure 3 d'un autre mode de réalisation des moyens d'actionnement,
- la figure 5 est une vue schématique en coupe longitudinale de la partie arrière d'un véhicule, le toit étant en position déployée et le dossier du siège délimitant le coffre arrière étant dans une première position angulaire dans laquelle il s'étend vers l'arrière du véhicule ;
- la figure 6 est une vue schématique semblable à la figure 5, le toit étant en position pliée rangée dans le coffre, le dispositif étant agencé selon une première conformation selon laquelle le dossier est dans sa première position angulaire ;
- la figure 7 est une vue schématique semblable à la figure 3, le dispositif étant agencé selon une seconde conformation selon laquelle le dossier est dans une troisième position angulaire située entre ses première et seconde positions angulaires ;
- la figure 8 est une vue en perspective de trois quart arrière d'un premier mode de réalisation du dispositif de pivotement du siège;
- la figure 9 est une vue schématique partielle en coupe montrant le dispositif selon le premier mode de réalisation et agencé selon la première conformation, les traits continus correspondant aux première et troisième positions angulaires du dossier, et les tirets correspondant à sa deuxième position angulaire;
- la figure 10 est une vue semblable à la figure 9, le dispositif étant agencé selon la seconde conformation, les traits continus correspondant à la première position angulaire du dossier, les tirets correspondant à sa deuxième position angulaire, et les pointillés correspondant à sa troisième position angulaire;
- la figure 11 est une vue agrandie semblable à la figure 9, le dispositif étant selon un second mode de réalisation; et
- la figure 12 est une vue agrandie semblable à la figure 10, le dispositif étant selon le second mode de réalisation.

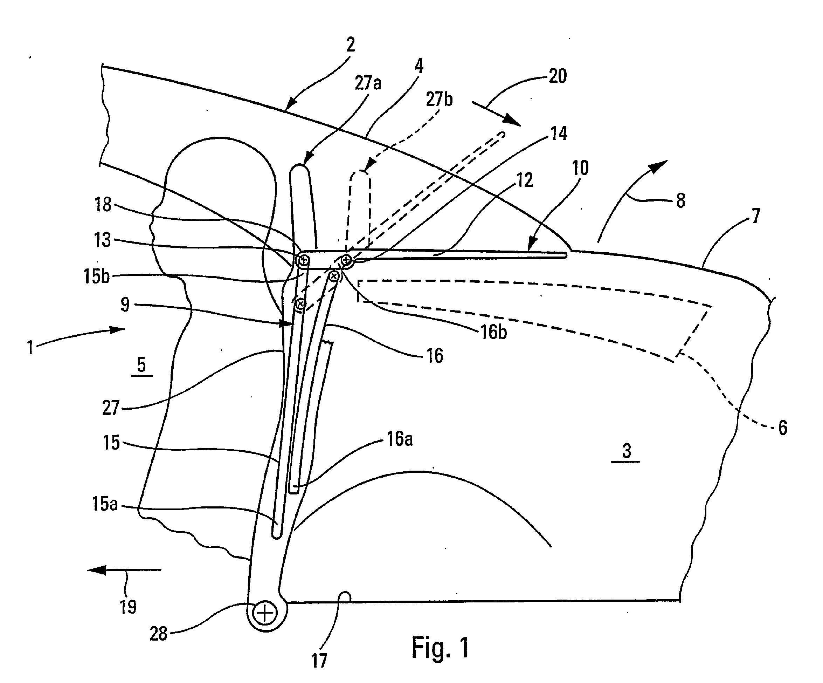

On a représenté schématiquement à la figure 1 un véhicule découvrable 1 comportant un toit rigide 2 repliable à l'intérieur du coffre arrière 3 du véhicule.

De façon connue, le toit rigide repliable 2 comprend une partie de toit arrière 4, représentée à la figure dans sa position déployée sur l'habitacle 5 du véhicule, et montée de façon pivotante autour d'un axe (non représenté) transversal par rapport au véhicule.

Le toit rigide repliable 2 comporte également une partie de toit avant 6 schématisée en tirets dans sa position repliée à l'intérieur du coffre arrière 3, cette partie de toit avant 6 étant en général articulée dans sa région arrière à la région avant de la partie de toit arrière 4.

De façon connue, pour permettre le passage du toit repliable 2 de l'une à l'autre de ses deux positions déployée et repliée, le capot 7 du coffre arrière 3 doit s'ouvrir de l'avant de l'arrière, dans le sens de la flèche 8, tandis que le système de plage arrière 9 doit être escamoté.

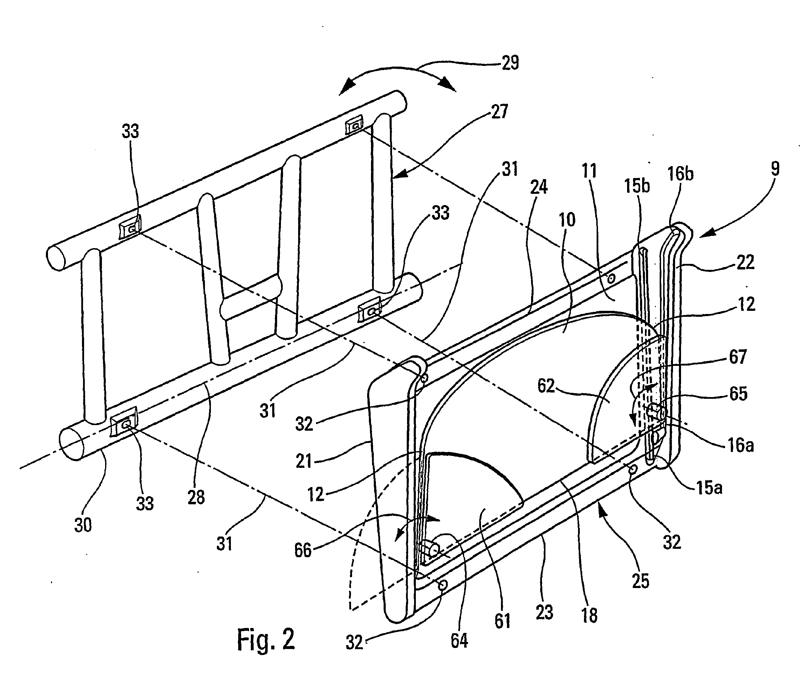

Le système de plage arrière escamotable 9 représenté à la figure 1 comprend au moins une tablette centrale 10 et des moyens pour déplacer la tablette centrale 10 dans les deux sens entre sa position normale sensiblement horizontale, représentée en traits pleins à la figure, et une position rangée à l'intérieur du coffre arrière 3, sensiblement contre la paroi, schématisée en 11 (voir figure 2), limitant le coffre arrière 3 vers l'avant du véhicule, dans laquelle on peut replier le toit repliable 2 à l'intérieur du coffre arrière 3.

Suivant la présente invention, la tablette centrale 10 comporte, sur chaque bord latéral 12, un premier et un second organes formant galets de came 13, 14, en saillie vers l'extérieur par rapport audit bord latéral 12 et adaptés à coopérer chacun avec un premier ou un second organe complémentaire formant came respectif 15, 16 solidaire de la carrosserie 17 du véhicule 1.

Les organes formant galets de came 13, 14, et les organes complémentaires formant cames respectifs 15, 16, sont agencés de manière à guider la tablette centrale 10 selon une trajectoire prédéterminée entre ces deux positions normale et rangée, dans un sens ou dans l'autre, sous l'action de moyens d'actionnement de ladite tablette centrale 10 agissant à proximité du bord avant 18 de ladite tablette centrale 10.

Comme on le voit à la figure 1, le premier organe formant galet de came 13 est situé au voisinage du bord avant 18 de la tablette centrale 10.

De cette manière, le bord avant 18 de la tablette centrale 10 ne déborde pas vers l'avant du véhicule, dans le sens de la flèche 19, par rapport au premier organe complémentaire formant came 15, ce qui permet de placer ladite première came 15 par rapport à la paroi 11 limitant vers l'avant le coffre arrière 3.

Comme représenté à la figure 1, le premier organe complémentaire formant came, ou première came, 15 adapté à coopérer avec le premier organe formant galet, ou premier galet, 13, est sensiblement rectiligne. Ceci permet de définir avec précision le profil nécessaire pour le second organe complémentaire formant came, ou seconde came, 16, pour obtenir la trajectoire prédéterminée souhaitée de la tablette centrale 10.

Le second organe complémentaire formant came, ou seconde came, 16, adapté à coopérer avec le second organe formant galet, ou second galet, 14, est, dans sa partie supérieure 16a, courbé vers l'arrière de manière à faire pivoter la tablette centrale 10 vers l'arrière, dans le sens de la flèche 20, à la fin de son déplacement vers sa position normale.

Le rayon de courbure de cette partie supérieure courbée peut être choisi d'une manière quelconque en fonction des conditions spécifiques d'un véhicule donné: encombrement des diverses parties 4,6 du toit rigide repliable 2 dans la position repliée du toit à l'intérieur du coffre arrière 3, position de la partie de toit arrière 4 dans son pivotement dans un sens ou dans l'autre, lors de la fin du déplacement de la tablette centrale, position du dossier 27, etc....

La trajectoire prédéterminée de la tablette centrale 10 partant de sa position rangée de la figure 2 à sa position normale de la figure 1 comporte donc un premier tronçon de trajectoire sensiblement rectiligne et proche de la verticale, suivi par un second tronçon supérieur commandant la rotation de la tablette 10 dans la direction de la flèche 20 lorsque le second galet 14 arrive dans la partie supérieure courbée de la seconde came 16.

Comme schématisé à la figure 1, l'extrémité inférieure 15a de la première came 15 recevant le premier galet 13 est située à un niveau plus bas que celle 16a de la seconde came 16, et à une distance de l'extrémité inférieure 16a de la seconde came 16 correspondant à la distance séparant les deux galets 13, 14 d'un même bord latéral 12. Les deux extrémités inférieures 15a, 16a sont disposées l'une par rapport à l'autre de façon à donner à la tablette centrale 10 la position rangée recherchée.

De la même manière, l'extrémité supérieure 15b de la première came 15 est disposée, par rapport à l'extrémité supérieure 16b de la seconde came 16, à une distance correspondant à la distance séparant les deux galets 13, 14 d'un même bord latéral, de façon à donner à la tablette centrale 10 la position normale sensiblement horizontale recherchée.

Dans l'exemple représenté à la figure 2, les deux organes complémentaires formant cames 15, 16, situés d'un même côté de la carrosserie 17 sont portés par une armature respective gauche 21, droite 22, solidaire de la carrosserie (appelé également structure ou bâti) 17 du véhicule 1.

Bien entendu, les première et seconde cames 15, 16 sont ménagées sur les surfaces en vis-à-vis l'une de l'autre des armatures 21, 22.

Il suffit alors, comme schématisé à la figure 2, de relier les deux armatures 21, 22 par une traverse inférieure 23 et une traverse supérieure 24 pour constituer un cadre 25 portant la tablette centrale 10 de manière à former un système de plage arrière 9 d'un seul tenant susceptible d'être monté à l'intérieur d'un véhicule correspondant. Un tel système est adapté à être, notamment, fixé sur la surface arrière du dossier 27 des sièges situés le plus en arrière à l'intérieur de l'habitacle 5 du véhicule 1.

En variante, le système 9 peut également être fixé d'une autre manière quelconque sur la carrosserie 17 du véhicule 1.

Dans l'exemple de la figure 2, le dossier 27, dont on n'a représenté que l'ossature, est monté de manière pivotante autour d'un axe de pivotement 28 qui est situé à la partie inférieure du dossier 27 et qui est solidaire de la carrosserie 17 du véhicule 1, ce pivotement étant schématisé par la flèche 29 à la figure.

Dans le mode de réalisation de la figure 2, le dossier 27 est monté sur un arbre 30 ayant pour axe l'axe 28 et monté de manière pivotante par des moyens connus en eux-mêmes (non représentés) sur l'ossature du siège ou directement sur la carrosserie 17 du véhicule 1.

En variante (non représentée), le dossier 27 pourrait être monté de manière pivotante, d'une manière quelconque connue, par rapport à l'ossature du siège ou à la carrosserie.

Le dossier 27 peut être déplacé par des moyens quelconques reliés ou non au système de toit rigide repliable.

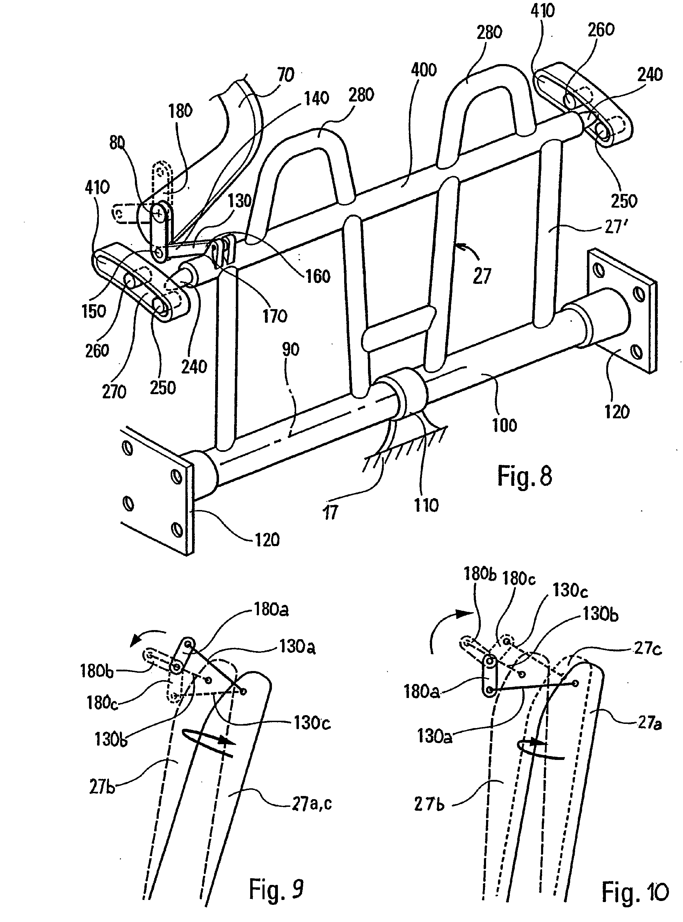

Le dossier 27 peut ainsi être déplacé par un dispositif du type décrit, de la page 15, ligne 15, à la page 16, ligne 8, et représenté à la figure 8, de FR-A-2 601 906, ce dispositif étant actionné par une bielle liée à un arceau pivotant d'une capote escamotable, l'arceau pivotant de capote pouvant être remplacé par un bras de pivotement (non représenté) du toit rigide repliable 2.

La paroi 11 limitant vers l'avant le coffre arrière 3 peut être fixée à l'ossature du dossier 27. Elle peut également, comme schématisé à la figure 2, être fixée au cadre 25 et faire partie intégrante du système de plage arrière 9 représenté qui est lui-même fixé au dossier 27 par des moyens connus tels que des vis schématisées par les lignes en tirets 31 et traversant des orifices correspondants 32 du cadre 25 et 33 du dossier 27.

Ainsi, lorsque le toit repliable 2 est dans sa position repliée à l'intérieur du coffre arrière 3, (seule la partie de toit avant 6 est représentée en tirets à la figure 1), le dossier 27 est dans sa position avancée, pivotée vers l'avant, représentée en 27a en traits pleins à la figure 1, pour laisser une distance longitudinale maximale à l'intérieur du coffre arrière 3 pour le rangement des diverses parties du toit repliable 2. Au contraire, lorsque le toit est dans sa position déployée au-dessus de l'habitacle 5 du véhicule 1, le dossier 27 peut être dans sa position pivotée vers l'arrière schématisée en tirets en 27b à la figure 1, qui plus est confortable pour les passagers.

Les moyens d'actionnement de la tablette centrale 10 peuvent être des moyens connus quelconques, les galets 13, 14 et les cames 15, 16 étant conformés de manière correspondante.

Ces moyens d'actionnement pourraient ainsi être constitués par au moins un vérin (non représenté) situé dans la partie inférieure du coffre arrière 3 et agissant sur le bord avant 18 de la tablette centrale 10 ou à proximité dudit bord avant 18, de façon à guider de manière directe et sans risque de coincement le déplacement de la tablette centrale 10 entre ses deux positions. Les cames 15 et 16 pourraient alors être de simples rainures ou glissières ménagées sur l'armature 21, 22 correspondante, les galets 13, 14 étant de simples doigts prisonniers de manière coulissante à l'intérieur de ces glissières.

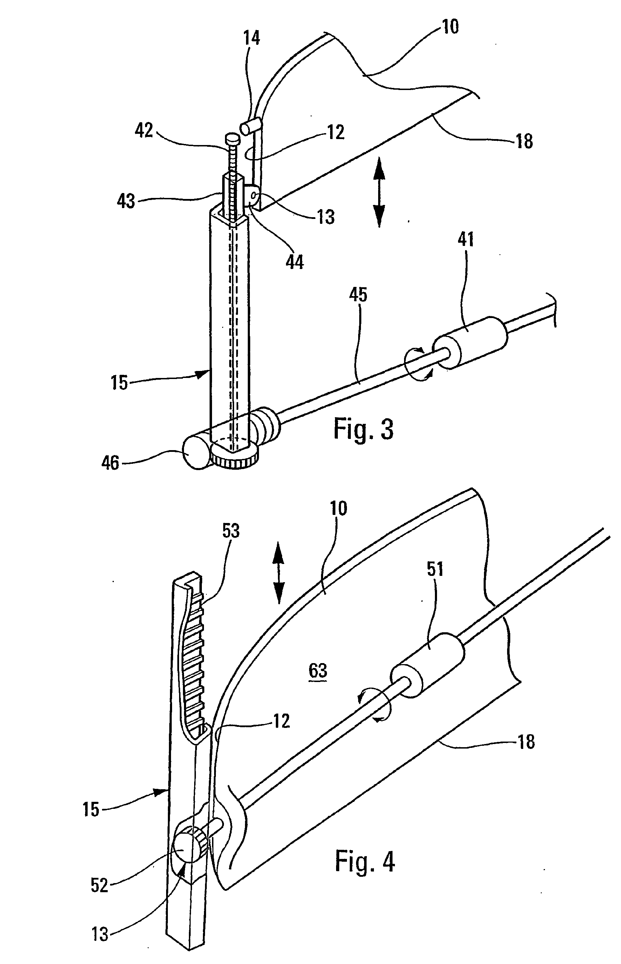

Dans le mode de réalisation représenté à la figure 3, les moyens d'actionnement comprennent un moteur 41 qui est solidaire de la carrosserie 17 et qui entraîne de façon connue de chaque côté du véhicule 1 une vis sans fin 42 respective faisant partie du premier organe complémentaire formant came 15 correspondant. Le premier organe formant galet de came 13 est monté de manière pivotante sur un écrou 43 qui est bloqué en rotation et qui se déplace le long de la vis sans fin 42 et de la came 15 correspondante dans un sens ou dans l'autre lorsque la vis 42 tourne dans un sens ou dans l'autre sous l'action du moteur 41. Dans cet exemple, le moteur 4 entraîne chaque vis sans fin 42 par l'intermédiaire d'un arbre 45 entraînant un renvoi d'angle 46.

Le galet de came 13 est par exemple un doigt, non représenté, reçu de manière pivotante dans un palier 44 porté par l'écrou 43.

Dans le mode de réalisation de la figure 4, les moyens d'actionnement comprennent un moteur 51 fixé sous la tablette centrale 10. Chaque premier organe formant galet de came 13 est un pignon respectif 52 monté de manière pivotante sur le bord latéral 12 correspondant de la tablette centrale 10 de façon à être engrené avec une crémaillère 53 du premier organe complémentaire formant came 15 correspondant pour déplacer la tablette centrale 10 dans un sens ou dans l'autre lorsque le moteur 51 tourne dans un sens ou dans l'autre.

Dans l'exemple schématisé à la figure 2, la tablette centrale 10 porte deux tablettes latérales 61, 62, qui sont montées mobiles chacune près d'un bord latéral 12 respectif de la tablette centrale 10 de façon à être déployées chacune latéralement vers l'extérieur lorsque la tablette centrale 10 est dans sa position normale sensiblement horizontale, et à être rangées sous la surface inférieure 63 de la tablette centrale 10 lorsque cette dernière est dans sa position rangée ou doit être déplacée de sa position normale vers sa position rangée ou inversement.

Dans l'exemple représenté, chaque tablette latérale 61 est montée de façon pivotante autour d'un axe de pivotement respectif 64, 65 sensiblement perpendiculaire à la tablette centrale 10, par exemple suivant le mode de réalisation décrit dans la demande de brevet français 02 05568 au nom de la demanderesse.

Bien entendu, la présente invention n'est pas limitée aux modes de réalisations que l'on vient de décrire, et on peut apporter à ceux-ci de nombreux changements et modifications sans sortir du domaine de l'invention.

Ainsi, la présente invention peut être adaptée à tous les types de toit rigide repliable, le déplacement de la tablette centrale 10 étant synchronisé avec celui du toit pour que la tablette 10 ne gène pas le déplacement du toit 2 ou inversement. Ce qui précède s'applique quelle que soit celle des diverses parties du toit repliable 2 qui occupe la position située le plus vers l'avant lorsque le toit 2 est replié à l'intérieur du coffre arrière 3.

La présente invention peut également être adaptée à tous les types de dossier de siège ou à tous les types de carrosserie.

Les tablettes latérales 61, 62 escamotables peuvent également être différentes de celles décrites ci-dessus.

La seconde came 16 peut comporter, en plus de sa partie supérieure 16b courbée vers l'arrière pour commander le pivotement de la tablette centrale 10, une partie intermédiaire non rectiligne ayant un profil prédéterminé choisi pour donner à la tablette centrale 10 une trajectoire prédéterminée.

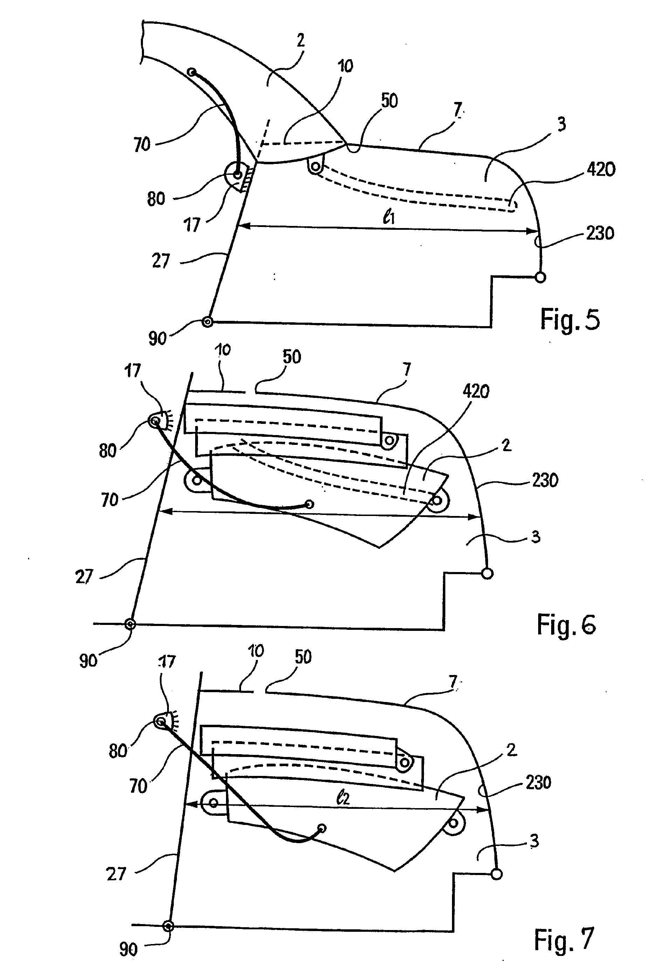

Comme on peut le voir aux figures 5 à 7, le coffre arrière 3 dans lequel est repliable le toit 2 est délimité, en direction de l'avant du véhicule, par le dossier de siège 27.

Un bras d'entraînement 70 est monté de façon pivotante sur la carrosserie 17 selon un axe de rotation 80 par une première extrémité, et une glissière 420 est réalisée dans la carrosserie 17, au niveau du coffre arrière. Le toit 2 est adapté à être entraîné de l'une à l'autre de ses positions par le bras d'entraînement 70 qui est lié de façon pivotante, par sa deuxième extrémité, à l'extrémité avant de la partie arrière du toit, et à être guidé dans son mouvement par l'extrémité arrière de la partie arrière du toit qui est montée de façon coulissante dans les glissières 420.

Le capot 7 de coffre est monté mobile entre une position fermée, une position ouverte de l'avant vers l'arrière pour permettre le rangement du toit dans ce coffre, et de l'arrière vers l'avant pour permettre l'introduction de bagages.

Par ailleurs, le bord avant 50 du capot délimite la partie supérieure avant du coffre, notamment au niveau arrière de la plage arrière 10 du véhicule quand le capot 7 est en position fermée.

Le véhicule comporte par ailleurs un dispositif adapté à entraîner le dossier 27 entre une première position angulaire dans laquelle ce dossier s'étend vers le haut et vers l'arrière du véhicule, le toit étant alors en position déployée (figure 5), et une seconde position angulaire dans laquelle il s'étend de façon moindre vers l'arrière du véhicule. Les première et seconde positions angulaires sont, respectivement, les positions angulaires la plus en arrière et la plus en avant que le dossier peut prendre.

De façon à réaliser ce mouvement, comme on peut le voir à la figure 8, le dossier 27 est monté de façon pivotante par rapport à la carrosserie 17 autour d'un axe de pivotement 90.

Ainsi, la distance l'amplitude du mouvement de la partie supérieure du dossier est importante et permet le débattement du toit.

Le dispositif coopère avec le bras d'entraînement 70 de façon à entraîner le pivotement du dossier 27 dès le début du déplacement du toit, de sorte que le dossier se trouve rapidement en avant de sa première position facilitant le débattement du toit puis, quand il est dans sa deuxième position angulaire, la distance séparant le bord avant 50 du capot 7 en position ouverte de l'avant vers l'arrière du haut du dossier est augmentée de façon à permettre le passage du toit.

Selon l'invention, le dispositif comprend des moyens de transmission qui coopèrent avec le bras d'entraînement 70 et qui sont adaptés à entraîner le dossier dans un mouvement de va-et-vient quand le toit passe de l'une à l'autre de ses positions de sorte que, quand le toit 2 est dans sa position pliée rangée, le dossier 3 se trouve dans une troisième position angulaire dans laquelle il est en arrière de sa deuxième position angulaire.

Quand il est dans cette troisième position angulaire, le dossier a une orientation suffisante pour assurer un bon confort à l'occupant.

Selon un premier mode de réalisation, comme illustré aux figures 8 à 10, les moyens de transmission sont formés par une bielle 130 qui est montée de façon pivotante, d'une part, par une première extrémité 140, sur le bras d'entraînement 70, autour d'un premier axe d'articulation 150 s'étendant transversalement au véhicule, et, d'autre part, par une deuxième extrémité 160, sur le dossier 27, autour d'un deuxième axe d'articulation 170 s'étendant transversalement au véhicule.

Dans le mode de réalisation illustré aux figures 8 à 10, la première extrémité 140 de la bielle 130 est montée pivotante par rapport à une réglette 180 qui est solidaire du bras d'entraînement 70.

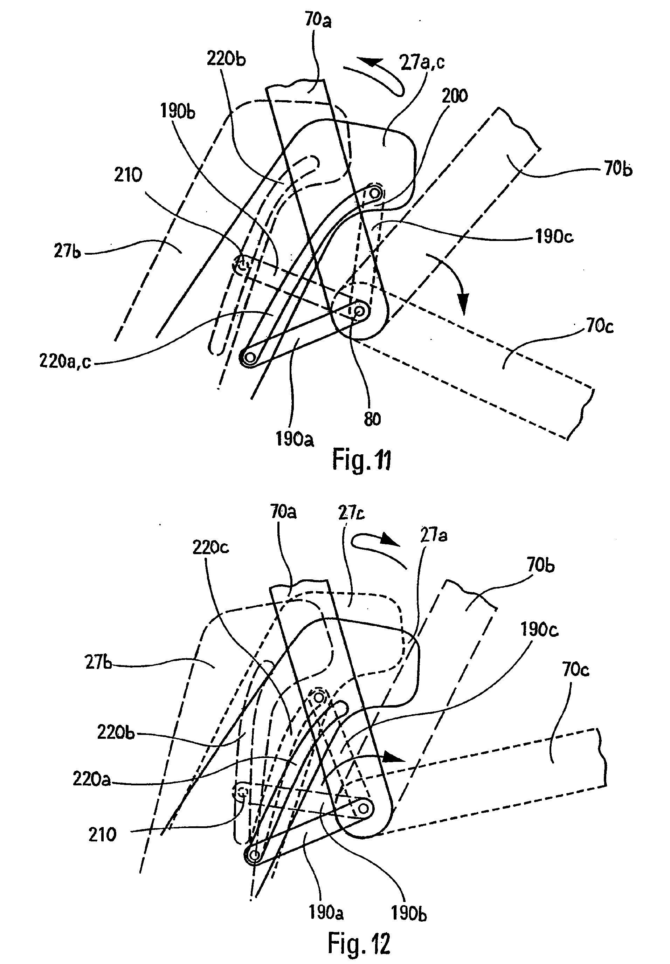

Selon un second mode de réalisation, comme illustré aux figures 11 et 12, les moyens de transmission sont formés par une tige 190 qui est solidaire du bras d'entraînement 70 et dont l'extrémité libre 200 comprend un ergot 210 monté de façon coulissante dans une rainure 220 réalisée dans le dossier 27. La rotation de l'ergot 210 autour de l'axe de rotation 80 et son coulissement le long de la rainure 220 entraîne le pivotement du dossier autour de l'axe de pivotement 90.

Comme on peut le voir aux figures 11 et 12, la rainure 220 s'étend principalement radialement par rapport à l'axe de pivotement 90, le long du dossier 27.

Selon une première conformation du dispositif, les moyens de transmission entraînent le dossier dans un mouvement de va-et-vient complet quand le toit 2 passe de l'une à l'autre de ses positions. Selon cette conformation, le dossier 27 occupe la même position que le toit soit plié rangé ou qu'il soit déployé et, de ce fait, la troisième position angulaire correspond à la première position angulaire (comme illustré aux figures 9 et 11).

Le processus de rangement illustré à la figure 9 est le suivant : initialement, quand le toit 2 est déployé, le dossier 27a,c est dans sa première position angulaire (en trait continu), la bielle 130a et la réglette 180a sont dans leur position correspondante (en trait continu) ; quand le dossier 27b est dans sa deuxième position angulaire (en tirets), le toit est en cours de déploiement et la bielle 130b et la réglette 180b sont dans leur position correspondante (en tirets) ; quand le toit 2 est plié rangé, le dossier 27a,c est dans sa troisième position angulaire qui est aussi sa première position angulaire (en trait continu), la bielle 130c et la réglette 180c sont dans leur position correspondante (en pointillés).

Celui illustré à la figure 11 est le suivant : initialement, quand le toit est déployé, le dossier 27a,c est dans sa première position angulaire (en trait continu), la tige 190a (logée dans la rainure 220a,c) et le bras 70a sont dans leur position correspondante (en trait continu); quand le dossier 27b est dans sa deuxième position angulaire (en tirets), le toit est en cours de déploiement et la tige 190b (logée dans la rainure 220b) et le bras 70b sont dans leur position correspondante (en tirets); quand le toit 2 est plié rangé, le dossier 27a,c est dans sa troisième position angulaire qui est aussi sa première position angulaire (en trait continu), la tige 190c (logée dans la rainure 220a,c) et le bras 70c sont dans leur position correspondante (en pointillés).

Cette première conformation présente l'avantage de procurer à la personne occupant le siège exactement le même confort, que le toit soit déployé ou plié.

Selon une seconde conformation du dispositif, les moyens de transmission entraînent le dossier 27 dans un mouvement de va-et-vient partiel quand le toit passe de l'une à l'autre de ses positions. Selon cette seconde conformation, la troisième position angulaire est comprise entre les première et deuxième positions angulaires. De préférence, le décalage angulaire entre les première et troisième positions angulaires est suffisamment faible pour que le siège reste confortable quand le toit est rangé.

Le processus de rangement illustré à la figure 10 est le suivant: initialement, quand le toit est déployé, le dossier 27a est dans sa première position angulaire (en trait continu), la bielle 130a et la réglette 180a sont dans leur position correspondante (en trait continu); quand le dossier 27b est dans sa deuxième position angulaire (en tirets), le toit est en cours de déploiement et la bielle 130b et la réglette 180b sont dans leur position correspondante (en tirets); quand le toit est plié rangé, le dossier 27c est dans sa troisième position angulaire (en pointillés), la bielle 130c et la réglette 180c sont dans leur position correspondante (en pointillés).

Celui illustré à la figure 12 est le suivant: initialement, quand le toit est déployé, le dossier 27a est dans sa première position angulaire (en trait continu), la tige 190a et le bras 70a sont dans leur position correspondante (en trait continu); quand le dossier 27b est dans sa deuxième position angulaire (en tirets), le toit est en cours de déploiement et la tige 190b et le bras 70b sont dans leur position correspondante (en tirets); quand le toit est plié rangé, le dossier 27c est dans sa troisième position angulaire (en pointillés), la tige 190c et le bras 70c sont dans leur position correspondante (en pointillés).

Cette seconde conformation est particulièrement intéressante quand, selon la géométrie et le volume du coffre arrière 3 et du toit plié rangé, le toit est légèrement trop long pour pouvoir être rangé dans le coffre, ou, formulé autrement, quand l'on souhaite pouvoir ranger un toit 2 dans un coffre arrière de longueur réduite. Comme on peut le voir aux figures 5 et 7, la longueur 11 séparant le dossier 27 dans sa première position angulaire de la paroi arrière 230 du coffre arrière est plus petite que la longueur 12 séparant le dossier 27 dans sa troisième position angulaire de cette même paroi 230.

Dans le premier mode de réalisation, les positions relatives de l'axe de rotation 80, de l'axe de pivotement 90 et des premier et second axes d'articulation 150,170, et la dimension de la bielle 130 permettent de déterminer la troisième position angulaire du dossier 27 (figures 9 et 10).

Dans le second mode de réalisation, les positions relatives de l'axe de rotation 80 et de l'axe de pivotement 90 et la forme de la rainure 220 permettent de déterminer la troisième position angulaire du dossier 27 (figures 11 et 12).

Par ailleurs, comme on peut le voir à la figure 8, le dossier 27 et la carrosserie 17 comprennent des moyens d'immobilisation respectifs qui sont agencés de façon à permettre l'immobilisation du dossier quand ce dernier est dans sa première position angulaire ou dans sa troisième position angulaire. De cette façon, ces moyens d'immobilisation apportent une rigidité supplémentaire dans le sens transversal du véhicule.

A cet effet, le dossier 27 comporte, à chacune de ses extrémités transversales, un doigt 240 qui est mobile en direction transversale entre une position sortie vers l'extérieur du dossier et une position escamotée. Des moyens d'actionnement, comme un moteur (non représenté), peuvent être intégrés au dossier afin d'entraîner les doigts 240 aussi bien vers leur position sortie que vers leur position escamotée.

De façon complémentaire, la carrosserie 17 comporte, de chaque côté, des premier 250 et second 260 orifices qui sont adaptés à recevoir le doigt 240 correspondant en position sortie quand le dossier est respectivement dans ses première et troisième positions angulaires. De cette façon, le dossier est rigidement fixé à la carrosserie 17 qu'il soit dans sa première ou troisième position angulaire.

De façon particulière, quand le dispositif est agencé selon la première configuration, la carrosserie ne comporte, de chaque côté, qu'un seul orifice qui est adapté à recevoir le doigt 240 correspondant en position sortie quand le dossier 27 est dans sa première (troisième) position angulaire (que le toit soit rangé ou déployé).

De plus, dans le présent exemple, la carrosserie 17 comporte, de chaque côté, une glissière 270 (formant des moyens de guidage) qui est adaptée à recevoir de façon coulissante le doigt 240 correspondant en position escamotée quand le dossier pivote. La glissière 270 s'étend entre l'orifice 250 recevant le doigt 240 en position sortie quand le dossier 27 est dans sa première position angulaire et une extrémité 410 en face de laquelle est situé le doigt 240 quand le dossier est dans sa deuxième position angulaire. La profondeur de la glissière 270 est inférieure à celle des orifices 250,260. La glissière 270 forme un arc de cercle ayant pour centre l'axe de pivotement 90.

Afin d'augmenter l'amplitude du mouvement de la partie haute du dossier 27 (lé toit replié se logeant dans la partie haute du coffre), le dossier est monté sur la carrosserie 17 de façon pivotante autour de l'axe de pivotement 90 par son arbre inférieur 100 situé à l'extrémité inférieure du dossier 3.

Avantageusement, afin d'améliorer la rigidité de la carrosserie, la liaison pivotante de l'arbre inférieur 10 à la carrosserie 4 se fait par l'intermédiaire, d'une part, d'un palier lisse 110 recevant la partie centrale de l'arbre inférieur 100, et, d'autre part, de deux embases 120, chaque embase recevant une extrémité axiale de l'arbre inférieur 100, le palier lisse et les deux embases étant fixés à la carrosserie 17.

Avantageusement, afin d'améliorer la rigidité de la carrosserie, les deux doigts 240 sont disposés dans une barre maîtresse transversale 400 parallèle à l'axe de pivotement 90 située à proximité de l'extrémité supérieure du dossier 27.

Avantageusement, des arceaux de sécurité 280 sont montés non pas sur la carrosserie, mais sur le dossier (sa structure 27') et se déplacent en même temps que ce dernier.

Le dispositif selon la présente invention présente l'avantage particulier de constituer un module autonome et complet pouvant être monté sur un véhicule. Ce module comporte le dossier 27, les moyens de transmission 130,190, les moyens d'immobilisation 240,250,260, les moyens de guidage 270, le palier lisse 110 et les embases 120 permettant de conférer une bonne rigidité au véhicule, et les arceaux de sécurité 280.

Bien évidemment, la présente invention n'est pas limitée au présent mode de réalisation

Il serait par exemple possible que le dossier comporte à chacune de ses extrémités transversales un orifice, la carrosserie comportant, de chaque côté, des premier et second doigts mobiles en direction transversale entre une position escamotée et une position sortie dans laquelle ils sont adaptés à pénétrer dans l'orifice correspondant quand le dossier est respectivement dans sa première et sa troisième position angulaire. Bien évidemment, si le dispositif est agencé selon la première configuration, la carrosserie ne comporte, de chaque côté, qu'un doigt mobile.

Il serait aussi possible de remplacer le toit rigide repliable qui dans l'exemple est du type oscillo-coulissant par un autre type de toit rigide a priori en plusieurs parties repliables.

## Revendications

1. Assemblage modulaire comprenant :
- un dispositif adapté à faire pivoter un dossier (27) de siège autour d'un axe (28,90) situé en partie inférieure de ce dossier, lequel délimite vers l'avant le coffre arrière (3) d'un véhicule découvrable (1) comprenant un toit (2) rigide repliable entraîné, par un bras d'entraînement (70) monté de façon pivotante sur la carrosserie (17) du véhicule, entre une position déployée et une position pliée rangée dans le coffre arrière, le dispositif étant adapté, quand le toit est déplacé de l'une à l'autre de ses positions, à faire pivoter le dossier (27) entre une première position angulaire dans laquelle le dossier s'étend vers l'arrière du véhicule et dans laquelle le toit (2) est dans sa position déployée, et une seconde position angulaire dans laquelle le dossier se trouve le plus en avant, de façon à permettre le passage du toit entre le dossier et le bord avant (50) du capot (7), en position ouverte de celui-ci, **caractérisé par**
- un système de plage arrière escamotable (9) comprenant au moins une tablette centrale (10) et des moyens pour déplacer la tablette centrale dans les deux sens entre sa position normale sensiblement horizontale et une position rangée, à l'intérieur du coffre arrière (3) et sensiblement contre la paroi (11) limitant ledit coffre arrière vers l'avant, dans laquelle on peut replier le toit repliable (2), à l'intérieur dudit coffre (3), la tablette centrale (10) comportant, sur chaque bord latéral (12), un premier et un second organes formant galets de came (13, 14) en saillie vers l'extérieur par rapport audit bord latéral (12) et adaptés à coopérer chacun avec un premier ou un second organe complémentaire formant came respectif (15, 16) solidaire de la carrosserie (17) du véhicule, les organes formant galets de came (13, 14) et les organes complémentaires formant cames respectifs (15, 16) étant agencés de manière à guider la tablette centrale (10) selon une trajectoire prédéterminée entre ses deux positions normale et rangée, dans un sens ou dans l'autre, sous l'action de moyens d'actionnement de ladite tablette centrale agissant à proximité du bord avant (18) de ladite tablette centrale, les deux organes complémentaires formant cames (15, 16) situés d'un même côté de la carrosserie étant portés par une armature respective (21, 22) solidaire de la carrosserie du véhicule, chaque armature (21, 22) étant adaptée à être fixée sur la surface arrière dudit dossier de siège (27) correspondant.

2. Assemblage modulaire selon la revendication 1, **caractérisé en ce que** lesdites armatures (21, 22) sont reliées l'une à l'autre par des traverses (23, 24) pour constituer un cadre (25) portant la tablette (10) de manière à former un système de plage arrière (9) d'un seul tenant.

3. Assemblage modulaire selon la revendication 1 ou 2, **caractérisé en ce que** , dans le système de plage arrière (9), le premier organe complémentaire formant came le premier organe complémentaire formant came (15) adapté à coopérer avec le premier organe formant galet (13) est sensiblement rectiligne et le second organe complémentaire formant came (16) adapté à coopérer avec le second organe formant galet (14) est courbé vers l'arrière dans sa partie supérieure (16a) de manière à faire pivoter la tablette centrale (10) vers l'arrière à la fin de son déplacement vers sa position normale.

4. Assemblage modulaire selon l'une des revendications précédentes, **caractérisé en ce que**, dans le système de plage arrière, les moyens d'actionnement comprennent un moteur (51) fixé sous la tablette centrale (10), **en ce que** chaque premier organe formant galet de came (13) est un pignon (52) respectif monté sur le bord latéral (12) correspondant de la tablette centrale (10) de façon à être engrené avec une crémaillère (53) correspondante pour déplacer la tablette centrale (10) dans un sens ou dans l'autre lorsque le moteur (51) tourne dans un sens ou dans l'autre.

5. Assemblage modulaire selon l'une des revendications précédentes, **caractérisé en ce que**, dans le système de plage arrière, la tablette centrale (10) porte deux tablettes latérales (61, 62) qui sont montées mobiles chacune prés d'un bord latéral (12) respectif de la tablette centrale (10) de façon à être déployées chacune latéralement vers l'extérieur lorsque la tablette centrale (10) est dans sa position normale sensiblement horizontale, et à être rangées sous la tablette centrale (10) lorsque cette dernière est dans sa position rangée.

6. Véhicule découvrable (1) comprenant
- une carrosserie (17),
- un coffre arrière (3),
- un toit (2) rigide repliable entraîné, par un bras d'entraînement (70) monté de façon pivotante sur la carrosserie (17), entre une position déployée et une position pliée rangée dans le coffre,
- un dossier (27) de siège monté pivotant autour d'un axe (28,90) situé en partie inférieure de ce dossier, lequel délimite vers l'avant le coffre arrière
- et l'assemblage modulaire selon l'une des revendications précédentes

7. Véhicule selon la revendication 6, **caractérisé en ce que** le dispositif de pivotement du des moyens de transmission (130,190) dossier de siège (27) comprend des moyens de transmission (130,190) qui coopèrent avec le bras d'entraînement (70) et qui sont adaptés à entraîner le dossier (27) dans un mouvement de va-et-vient de sorte que, quand le toit (2) est dans sa position pliée rangée, le dossier se trouve dans une troisième position angulaire dans laquelle il est en arrière de sa deuxième position angulaire.

8. Véhicule selon la revendication 7, **caractérisé en ce que** les moyens de transmission (130) sont formés par une bielle (130) montée de façon pivotante, d'une part, par une première extrémité (140) sur le bras d'entraînement (70), et, d'autre part, par une deuxième extrémité (160), sur le dossier (27).

9. Véhicule selon la revendication 7, **caractérisé en ce que** les moyens de transmission (190) sont formés par une tige (190a,c), solidaire du bras d'entraînement (70), dont l'extrémité libre (200) comprend un ergot (210) monté de façon coulissante dans une rainure (220) réalisée dans le dossier (27).

10. Véhicule selon l'une des revendications 6 à 9, **caractérisé en ce que** le dossier (27) et la carrosserie comprennent des moyens d'immobilisation respectifs agencés de façon à permettre l'immobilisation du dossier quand ce dernier est dans ses première et troisième positions angulaires.

11. Véhicule selon la revendication 10, **caractérisé en ce que** le dossier (27) comporte, à chacune de ses extrémités transversales, un doigt (240) mobile en direction transversale entre une position sortie et une position escamotée, la carrosserie (17) comportant, de chaque côté, des premier (250) et second (260) orifices qui sont adaptés à recevoir le doigt (240) correspondant en position sortie quand le dossier est respectivement dans ses première et troisième positions angulaires.

12. Véhicule selon la revendication 11, **caractérisé en ce que** la carrosserie (17) comporte, de chaque côté, une glissière (270) qui est adaptée à recevoir de façon coulissante le doigt (240) correspondant en position escamotée quand le dossier pivote, et qui s'étend entre le premier orifice (250) et un lieu en face duquel est situé le doigt (240) quand le dossier (27) est dans sa deuxième position angulaire.

13. Véhicule selon l'une des revendications 6 à 12, **caractérisé en ce que**, dans le système de plage arrière, les moyens d'actionnement comprennent un moteur (41) qui est solidaire de la carrosserie (17) et qui entraîne de chaque côté du véhicule (1) une vis sans fin respective (42) faisant partie du premier organe complémentaire formant came (15) correspondant, et **en ce que** le premier organe formant galet de came (13) est monté de manière pivotante sur un écrou (43) bloqué en rotation et qui se déplace le long de la vis sans fin (42) correspondante dans un sens ou dans l'autre lorsque ladite vis (42) tourne dans un sens ou dans l'autre sous l'action du moteur (41).

## Claims

1. A modular assembly comprising:
- a device suitable for swivelling a seat back (27) about an axis (28, 90) located in the lower part of the seat back which delimits at the front the rear boot (3) of a convertible vehicle (1) having a rigid folding roof (2) which is carried along, by a driving arm (70) swivel-mounted on the bodywork (17) of the vehicle, between a deployed position and a folded position stowed in the rear boot, the device being suitable, when the roof is moved from one position to the other, for swivelling the seat back (27) between a first angular position in which the seat back extends towards the rear of the vehicle and in which the roof (2) is in its deployed position, and a second angular position in which the seat back is further forward so as to allow the roof to pass between the seat back and the front edge (50) of the boot lid (7), when the latter is in the open position,
**characterized by**
- a retractable parcel shelf system (9) comprising at least one central shelf (10) and means for moving the central shelf in both directions between its normal, substantially horizontal position and a stowed position, inside the rear boot (3) and substantially against the partition (11) delimiting said rear boot at the front, in which the folding roof (2) can be folded inside said boot (3), the central shelf (10) having, on each side edge (12), a first and a second member forming cam rollers (13, 14) which project outwards relative to said side edge (12) and which are each suitable for cooperating with a respective first or second complementary member forming a cam (15, 16) which is firmly attached to the bodywork (17) of the vehicle, the members forming cam rollers (13, 14) and the respective complementary members forming cams (15, 16) being arranged so as to guide the central shelf (10) along a predetermined path between its two normal and stowed positions, in one direction or the other, under the action of means for operating said central shelf which act in the vicinity of the front edge (18) of said central shelf, the two complementary members forming cams (15, 16) located on the same side of the bodywork being carried by a respective support (21, 22) which is firmly attached to the bodywork of the vehicle and each support (21, 22) being suitable for fixing to the rear surface of said corresponding seat back (27).

2. A modular assembly according to Claim 1, **characterized in that** said supports (21, 22) are joined together by crosspieces (23, 24) to make up a frame (25) which carries the shelf (10) so as to form a parcel shelf system (9) which is all in one piece.

3. A modular assembly according to Claim 1 or 2, **characterized in that,** in the parcel shelf system (9), the first complementary member forming a cam (15) suitable for cooperating with the first member forming a roller (13) is substantially rectilinear and the second complementary member forming a cam (16) suitable for cooperating with the second member forming a roller (14) is curved towards the rear in its upper portion (16a) so as to swivel the central shelf (10) towards the rear at the end of its movement towards its normal position.

4. A modular assembly according to one of the preceding claims, **characterized in that**, in the parcel shelf system, the operating means comprise a motor (51) fixed underneath the central shelf (10), **and in that** each first member forming a cam roller (13) is a respective pinion (52) mounted on the corresponding side edge (12) of the central shelf (10) so as to engage with a corresponding rack (53) for moving the central shelf (10) in one direction or the other when the motor (51) turns in one direction or the other.

5. A modular assembly according to one of the preceding claims, **characterized in that,** in the parcel shelf system, the central shelf (10) carries two side shelves (61, 62) which are each movably mounted close to a respective side edge (12) of the central shelf (10) so that each one is deployed sideways and outwards when the central shelf (10) is in its normal, substantially horizontal position, and is stowed underneath the central shelf (10) when the latter is in its stowed position.

6. A convertible vehicle (1) comprising:
- a body (17),
- a rear boot (3),
- a rigid folding roof (2) carried along, by a driving arm (70) swivel-mounted on the bodywork (17), between a deployed position and a folded position stowed in the boot,
- a seat back (27), swivel-mounted about an axis (28, 90) located in the lower part of said seat back, which delimits the rear boot at the front,
- and the modular assembly according to one of the preceding claims.

7. A vehicle according to Claim 6, **characterized in that** the device for swivelling the seat back (27) comprises transmission means (130, 190) which cooperate with the driving arm (70) and which are suitable for driving the seat back (27) in a to-and-fro movement such that, when the roof (2) is in its folded, stowed position, the seat back is in a third angular position in which it is to the rear of its second angular position.

8. A vehicle according to Claim 7, **characterized in that** the transmission means (130) comprise a connecting rod (130) swivel-mounted, on the one hand, by a first end (140) on the driving arm (70), and, on the other hand, by a second end (160) on the seat back (27).

9. A vehicle according to Claim 7, **characterized in that** the transmission means (190) comprise a rod (190a, c) which is firmly attached to the driving arm (70) and of which the free end (200) has a lug (210) mounted so as to slide in a slot (220) made in the seat back (27).

10. A vehicle according to one of Claims 6 to 9, **characterized in that** the seat back (27) and the bodywork include respective immobilizing means fitted so as to allow immobilization of the seat back when the latter is in its first and third angular positions.

11. A vehicle according to Claim 10, **characterized in that** the seat back (27) has, at each of its transverse ends, a finger (240) which is movable in transverse direction between an extended position and a retracted position, the bodywork (17) having, on each side, first (250) and second (260) openings which are suitable for receiving the corresponding finger (240) in the extended position when the seat back is in its first and third angular positions respectively.

12. A vehicle according to Claim 11, **characterized in that** the bodywork (17) has, on each side, a slide channel (270), which is suitable for receiving in a sliding manner the corresponding finger (240) in its retracted position when the seat back is swivelling, and which extends between the first opening (250) and a place opposite which the finger (240) is located when the seat back (27) is in its second angular position.

13. A vehicle according to one of Claims 6 to 12, **characterized in that**, in the parcel shelf system, the operating means comprise a motor (41) which is firmly attached to the bodywork (17) and which, on each side of the vehicle (1), drives a respective endless screw (42) forming part of the corresponding first complementary member forming a cam (15), **and in that** the first member forming a cam roller (13) is swivel-mounted on a nut (43) which is locked against rotation and which moves along the corresponding endless screw (42) in one direction or the other when said screw (42) turns in one direction or the other under the action of the motor (41).

## Patentansprüche

1. Modularer Verbund, umfassend:
- eine Einrichtung ausgelegt zum Schwenken einer Rückenstütze (27) eines Sitzes um eine sich im unteren Abschnitt dieser Rückenstütze befindenden Achse (28, 90), welche den Heckkofferraum (3) eines aufdeckbaren Fahrzeugs (1) nach vorne begrenzt, umfassend ein zusammenfaltbares starres Dach (2) angetrieben über einen in schwenkbarer Weise an der Karosserie (17) des Fahrzeugs montierten Antriebsarm (70), zwischen einer entfalteten und einer gefalteten in den Heckkofferraum eingeräumten Position, wobei die Einrichtung dazu ausgelegt ist, wenn das Dach von der einen in die andere seiner Positionen bewegt wird, die Rückenstütze (27) zu schwenken zwischen einer ersten angewinkelten Position in der die Rückenstütze sich in das Hintere des Fahrzeugs erstreckt und in der das Dach (2) in seiner entfalteten Position ist, und einer zweiten angewinkelten Position, in der die Rückenstütze sich weiter vorne befindet, in einer Weise um die Passage des Daches zwischen der Rückenstütze und dem vorderen Rand (50) der Haube (7) zu erlauben, wenn diese in geöffneter Position ist, **gekennzeichnet durch**,
- ein System einer versenkbaren hinteren Fläche (9), umfassend zumindest eine zentrale Platte (10) und Mittel zum Bewegen der zentralen Platte in die zwei Richtungen zwischen ihrer normalen, etwa horizontalen, und einer eingeräumten Position, im Inneren des Heckkofferraums (3) und etwa bei der Wandung (11), welche den Heckkofferraum nach vorne begrenzt, in dem das zusammenfaltbare Dach (2) in dem Innenraum des Heckkofferraums (3) zusammengefaltet werden kann, die zentrale Platte (10) umfassend an jeder ihrer lateralen Seiten (12), ein erstes und ein zweites Führungsüberstände (galets de came) ausbildende Organ (13, 14), welche nach außen über diese lateralen Seiten (12) überstehen und welche jede dazu ausgelegt sind, mit einem ersten oder einem zweiten eine entsprechende Führung (came) ausbildenden Komplementärorgan (15, 16) zu kooperieren, im Zusammenhalt mit der Karosserie (17) des Fahrzeugs, wobei die Führungsüberstände ausbildenden Organe (13, 14) und die entsprechende Führungen ausbildenden Komplementärorgane (15, 16) zum Führen der zentralen Platte (10) in einer Weise zusammengesetzt sind entsprechend einer vorbestimmten Trajektorie zwischen ihren zwei Positionen, normal und eingeräumt, in einer Richtung oder in der anderen, unter Aktivität von Antriebsmitteln der zentralen Platte, agierend in der Nähe der vordere Kante (18) der zentralen Platte, wobei die zwei Führungen ausbildenden Komplementärorgane (15, 16), welche sich auf einer gleichen Seite der Karosserie befinden, jeweils von einem Gestell (21, 22) getragen sind, im Zusammenhalt mit der Karosserie des Fahrzeugs, wobei jedes Gestell (21, 22) dazu ausgelegt ist, an der entsprechenden hinteren Oberfläche der Rückenstütze des Sitzes (27) fixiert zu werden.

2. Modularer Verbund nach Anspruch 1, **dadurch gekennzeichnet, dass** die Gestelle (21, 22) über Stege (23, 24) miteinander verbunden sind, um einen Rahmen (25) zu bilden, tragend die Platte (10) in einer Weise zum Ausbilden eines Systems einer hinteren Fläche (9) mit einem einzigen Halter.

3. Modularer Verbund nach Anspruch 1 oder 2, **dadurch gekennzeichnet, dass** in dem System einer hinteren Fläche (9), das erste eine Führung ausbildende Komplementärorgan (15), dazu ausgelegt mit dem ersten einen Führungsüberstand ausbildenden Organ (13) zu kooperieren, etwa geradlinig ist und das zweite eine Führung ausbildende Komplementärorgan (16), dazu ausgelegt mit dem zweiten einen Führungsüberstand ausbildenden Organ (14) zu kooperieren, in seinem oberen Bereich (16a) nach hinten gekrümmt ist, in einer Weise zum Schwenken der zentralen Platte (10) nach hinten am Ende ihrer Bewegung in ihre normale Position.

4. Modularer Verbund nach einem der vorangehenden Ansprüche, **dadurch gekennzeichnet, dass** in dem System einer hinteren Fläche, die Antriebsmittel einen Motor (51) umfassen, befestigt unter der zentralen Platte (10), wobei jedes einen Führungsüberstand ausbildende Organ (13) ein Triebrad (52) ist, jeweils montiert an der entsprechenden lateralen Seite (12) der zentralen Platte (10), in einer Weise zum Eingreifen in eine entsprechende Zahnstange (53) zum Bewegen der zentralen Platte (10) in eine Richtung oder die andere, wenn der Motor (51) in eine Richtung oder die andere dreht.

5. Modularer Verbund nach einem der vorangehenden Ansprüche, **dadurch gekennzeichnet, dass** in dem System einer hinteren Fläche die zentrale Platte (10) zwei laterale Platten (61, 62) trägt, welche jede beweglich jeweils an einer lateralen Seite (12) der zentralen Platte (10) montiert sind, in einer Weise, so dass jede lateral nach außen aufklappbar ist, wenn die zentrale Platte (10) in ihrer normalen etwa horizontalen Position ist, und so, dass sie eingeräumt sind unter der zentralen Platte (10), wenn diese in ihrer eingeräumten Position ist.

6. Aufdeckbares Fahrzeug (1) umfassend,
- eine Karosserie (17),
- einen Heckkofferraum (3),
- ein zusammenfaltbares starres Dach (2), angetrieben über einen Antriebsarm (70) in einer schwenkbaren Weise an der Karosserie (17) montiert, zwischen einer entfalteten und einer gefalte ten Position, eingeräumt in dem Kofferraum,
- eine Rückenstütze (27) eines Sitzes schwenkbar montiert um eine sich im unteren Bereich dieser Rückenstütze befindende Achse (28, 90), welche nach vorne den Heckkofferraum begrenzt,
- und einen modularen Verbund nach einem der vorangehenden Ansprüche.

7. Fahrzeug nach Anspruch 6, **dadurch gekennzeichnet, dass** die Schwenkeinrichtung für die Rückenstütze des Sitzes (27) Mittel umfasst zur Übertragung (130, 190), welche mit dem Antriebsarm (70) kooperieren, und welche dazu ausgelegt sind, die Rückenstütze (27) mit einer hin-und-her Bewegung so anzutreiben, dass, wenn das Dach (2) in seiner gefalteten eingeräumten Position ist, die Rückenstütze sich in einer dritten angewinkelten Position befindet, in der sie sich hinter ihrer zweiten angewinkelten Position befindet.

8. Fahrzeug nach Anspruch 7, **dadurch gekennzeichnet, dass** die Übertragungsmittel (130) durch ein in schwenkbarer Weise montiertes Pleuel (130) ausgebildet sind, einerseits über ein erstes Endstück (140) an dem Antriebsarm (70), und, andererseits über ein zweites Endstück (160), an der Rückenstütze (27).

9. Fahrzeug nach Anspruch 7, **dadurch gekennzeichnet, dass** die Übertragungsmittel (190) durch einen Stängel (190) ausgebildet sind, im Zusammenhalt mit dem Antriebsarm (70), dessen freies Endstück (200) einen Zapfen (200) umfasst, der in verschiebbarer Weise in einer in der Rückenstütze (27) realisierten Nut (220) montiert ist.

10. Fahrzeug nach einem der Ansprüche 6 bis 9, **dadurch gekennzeichnet, dass** die Rückenstütze (27) und die Karosserie jeweils Mittel zur Immobilisation umfassen, welche in einer Weise agieren, die die Immobilisation der Rückenstütze erlaubt, wenn die letztere in ihren ersten und dritten angewinkelten Positionen ist.

11. Fahrzeug nach Anspruch 10, **dadurch gekennzeichnet, dass** die Rückenstütze (27) aufweist, an jedem ihrer querliegenden Endstücke, einen in Querrichtung zwischen einer ausgefahrenen Position und einer eingefahrenen Position beweglichen Finger (240), die Karosserie (17) umfassend, an jeder Seite, erste (250) und zweite (260) Öffnungen, welche ausgelegt sind zum Aufnehmen des entsprechenden Fingers (240) in der ausgefahrenen Position, wenn die Rückenstütze jeweils in ihren ersten und dritten angewinkelten Positionen ist.

12. Fahrzeug nach Anspruch 11, **dadurch gekennzeichnet, dass** die Karosserie (17) an jeder Seite aufweist, eine Führungsschiene (270), welche ausgelegt ist zur Aufnahme des entsprechenden Fingers (240) in einer eingefahrenen Position in einer schiebenden Weise,
wenn die Rückenstütze schwenkt, und welche sich erstreckt zwischen der ersten Öffnung (250) und einem gegenüberliegenden Ort, in dem der Finger (240) sich befindet, wenn die Rückenstütze (27) in ihrer zweiten angewinkelten Position ist.

13. Fahrzeug nach einem der Ansprüche 6 bis 12, **dadurch gekennzeichnet, dass** in dem System einer hinteren Fläche, die Antriebsmittel einen Motor (41) umfassen, welcher mit der Karosserie (17) zusammenhält und welcher an jeder Seite des Fahrzeugs (1) jeweils eine Schnecke (42) antreibt, einen Teil bildend des ersten entsprechenden eine Führung ausbildenden Komplementärorgans (15), und wobei das erste einen Führungsüberstand ausbildende Organ (13) in schwenkbarer Weise mit einer bezüglich ihrer Drehung blockierten Mutter (43) montiert ist, und welches sich entsprechend entlang der Schnecke (42) in eine Richtung oder in die andere Richtung verschiebt, wenn die Schraube (42) in eine Richtung oder in die andere Richtung dreht unter der Aktion des Motors (41).
